# EUROPÄISCHE PATENTANMELDUNG

(11) **EP 0 761 496 A1**
(43) Veröffentlichungstag der Anmeldung: **12.03.1997**
(21) Anmeldenummer: 96113131.5
(22) Anmeldetag: 16.08.1996
(51) Int. Cl.: B60P 3/38

(54) **Wohnwagen**

(30) Priorität: 25.08.1995 DE 29513652 U
(71) Anmelder: DETHLEFFS GmbH, D-88316 Isny (DE)
(72) Erfinder: Schmidt, Gerhard, 88318 Isny/Allgäu (DE)
(74) Vertreter: Patentanwälte Eisele, Otten & Roth

(57) **Zusammenfassung**

Es wird ein Wohnwagen beschrieben, der einen Wohnbereich (1), einen Eingangs- und/oder Küchenbereich (3) sowie im Wohnbereich (1) wenigstens ein Bett (4) enthält. Um kleinen Kindern in dem Wohnbereich (1) mehr Raum zum Spielen zu verschaffen und sie vor Verletzungen zu schützen, ist der Wohnbereich (1) durch ein schwenkbares Gitter (2) abgeschlossen und das Bett (4) ist an die Wand hochklappbar. Die Bettfüße (13) sind als kantenfreie stoßmindernde Kunststoffkappen ausgebildet oder mit solchen abgedeckt.

## Beschreibung

Die Erfindung betrifft einen Wohnwagen mit einem wenigstens ein Bett enthaltenden Wohnbereich und einem Eingangs- und/oder Küchenbereich.

Wenn sich kleine Kinder im Wohnwagen aufhalten, erfordert dies von der Aufsichtsperson stets besondere Aufmerksamkeit und Umsicht. Gefahren drohen besonders im Küchen- und Eingangsbereich. Der Erfindung liegt die Aufgabe zugrunde, kleinen Kindern einen abgeschlossenen Bereich mit verhältnismäßig großer Bodenfläche zur Verfügung zu stellen, der keine Gefahrenquellen enthält und kreatives Spiel fördert.

Diese Aufgabe wird erfindungsgemäß dadurch gelöst, daß der Wohnbereich mittels eines kindersicheren Sperrgitters vom Küchen- und/oder Eingangsbereich abtrennbar ist und daß das Bett an die Wand hochklappbar ist. Somit können Kinder in dem abtrennbaren Spielbereich auch einmal allein gelassen werden und durch das Hochklappen des Bettgestells wird freie Bodenfläche gewonnen.

Zur Betonung der Spielfunktion und um die Gefahren zu vermeiden, die auftreten können, wenn kleine Kinder unter ein Bett krabbeln, wird vorgeschlagen, daß als Bettgestell eine Platte vorgesehen ist, die mittels eines Scharniergelenks an einem Wandsockel in einer Höhe von größenordnungsmäßig etwa 15 cm angebracht ist, wobei der Abstand des Scharniers von der Wand mindestens der Dicke des Bettpolsters entspricht. Als Sockel eignet sich zum Beispiel ein Installationskanal, der Heizungsschläuche und dergleichen enthält. Das Bettpolster kann lose auf die Platte aufgelegt sein.

An der dem Scharniergelenk gegenüberliegenden Seite der Platte sind zu deren Abstützung in der Gebrauchsstellung Bettfüße angebracht, die als kantenfreie stoßmindernde Kunststoffkappen ausgebildet oder mit solchen Kappen abgedeckt sind. Infolge der geringen Höhe dieser Füße und ihrer gerundeten Form sind diese auch in der hochgeklappten Stellung des Betts, in der sie frei in den Raum stehen, ungefährlich.

Weiter wird vorgeschlagen, daß die Platte an der Unterseite als Schreib- und Malfläche ausgebildet ist, zum Beispiel wie eine Schultafel zum Beschriften mit Kreide.

Ein Ausführungsbeispiel der Erfindung wird nachfolgend anhand der Zeichnung erläutert. Im einzelnen zeigt
- Fig. 1: einen Teil eines Wohnwagengrundrisses und
- Fig. 2: einen Querschnitt II-II des Betts nach Fig. 1 in größerem Maßstab.

Ein Bereich 1 des Wohnwagens ist durch ein zweiteiliges schwenkbares Gitter 2 nach Art eines Kinderlaufstalls von einem Eingangs- und Küchenbereich 3 abgetrennt. Der Bereich 1 enthält ein nicht rechteckiges Kinderbett 4, einen Tisch 5 und zwei Sitzbänke 6. Der Bereich 3 umfaßt u. a. einen Küchenblock 7 und einen Schrank 8.

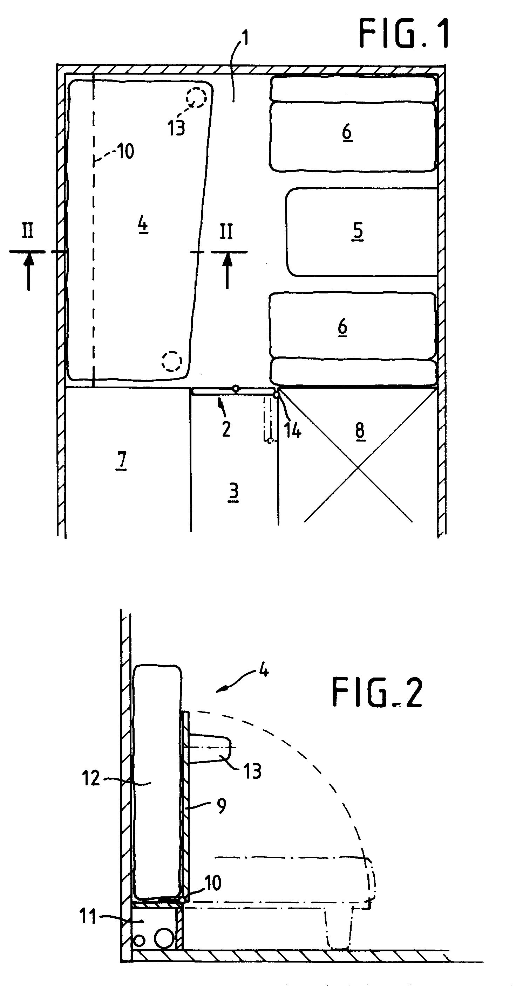

Wie auch Fig. 2 zeigt, dient als Bettgestell eine Platte 9, die mittels eines Scharniers 10 an der Kante eines Installationskanals 11 angelenkt ist. Der Kanal ist mindestens so breit, daß das Bettpolster 12 bei hochgeschwenkter Platte 9 unter dieser Platz findet. In der strichpunktiert gezeigten Gebrauchsstellung der Platte 9 stützt sich diese mit zwei Füßen in Gestalt eines gerundeten verhältnismäßig weichen Kunststoffhohlkörpers auf dem Boden ab. Die in der hochgeklappten Stellung zugängliche Seite der Platte 9 ist als Malfläche ausgebildet. Das Bett wird mit Druckknopflaschen aus Leder in der hochgeklappten Stellung gehalten. Das Gitter 2 besteht aus zwei Hälften, die durch ein vertikales Scharnier miteinander verbunden sind, wobei ein Teil am Schrank 8 mittels eines weiteren Scharniers 14 angelenkt ist. Das Gitter wird mittels eines Klappriegels in seiner gestreckten Stellung arretiert und ebenfalls mit Druckknopfschlaufen in seiner Sperrstellung und seiner strichpunktiert angedeuteten, zusammengeklappten Stellung gehalten.

## Patentansprüche

1. Wohnwagen mit einem wenigstens ein Bett enthaltenden Wohnbereich und mit einem Eingangs- und/oder Küchenbereich, dadurch gekennzeichnet, daß der Wohnbereich (1) mittels eines kindersicheren Sperrgitters (2) vom Eingangs- und/oder Küchenbereich (3) abtrennbar ist und daß das Bett (4) an die Wand hochklappbar ist.

2. Wohnwagen nach Anspruch 1, dadurch gekennzeichnet, daß als Bettgestell eine Platte (9) vorgesehen ist, die mittels eines Scharniergelenks (10) in einer Höhe von größenordnungsmäßig etwa 15 cm an einem Wandsockel (11) angebracht ist, wobei der Abstand des Scharniers (10) von der Wand mindestens der Dicke des Bettpolsters (12) entspricht.

3. Wohnwagen nach Anspruch 2, dadurch gekennzeichnet, daß an der dem Scharniergelenk (10) gegenüberliegenden Seite der Platte (9) Bettfüße (13) angebracht sind, die als kantenfreie stoßmindernde Kunststoffkappen ausgebildet oder mit solchen Kappen abgedeckt sind.

4. Wohnwagen nach Anspruch 2, dadurch gekennzeichnet, daß die Platte (9) an der Unterseite als Schreib- und Malfläche ausgebildet ist.
